# EUROPÄISCHE PATENTSCHRIFT

(11) **EP 1 198 363 B1**
(45) Veröffentlichungstag und Bekanntmachung des Hinweises auf die Patenterteilung: **17.05.2006**
(21) Anmeldenummer: 01936386.0
(22) Anmeldetag: 22.05.2001
(51) Int. Cl.: B60J 7/14

(54) **ZWISCHEN EINER SCHLIESSPOSITION UND EINER ÖFFNUNGSPOSITION VERSTELLBARES HARDTOP-FAHRZEUGDACH**
HARD TOP MOTOR-VEHICLE ROOF WHICH CAN BE RETRACTED BETWEEN A CLOSED POSITION AND AN OPEN POSITION
TOIT RIGIDE DE VEHICULE, POUVANT SE DEPLACER ENTRE UNE POSITION FERMEE ET UNE POSITON OUVERTE

(30) Priorität: 26.05.2000 DE 10026095
(43) Veröffentlichungstag der Anmeldung: 24.04.2002
(73) Patentinhaber: CTS Fahrzeug-Dachsysteme GmbH, 74321 Bietigheim-Bissingen (DE)
(72) Erfinder: HASSELGRUBER, Andreas, 71735 Eberdingen-Nussdorf (DE); BERNHARDT, Alexander, 75173 Pforzheim (DE); KLEIN, Berthold, 71277 Rutesheim (DE); REIFF, Lothar, 71706 Markgröningen (DE); WEZYK, Wojciech, 71065 Sindelfingen (DE)
(74) Vertreter: Müller, Gottfried
(86) Internationale Anmeldenummer: PCT/EP2001/005860
(87) Internationale Veröffentlichungsnummer: WO 2001/092043

(56) Entgegenhaltungen:
- EP-A- 0 678 411
- DE-A- 19 639 504
- DE-A- 19 706 417
- DE-A- 19 737 259
- US-A- 3 575 464
- US-A- 5 584 522

## Beschreibung

Die Erfindung befasst sich mit einem zwischen einer Schließposition und einer Öffnungsposition verstellbarem Hardtop-Fahrzeugdach nach dem Oberbegriff des Anspruches 1.

Ein Fahrzeugdach ist beispielsweise aus der Druckschrift DE 196 39 504 A1 bekannt. Diese Druckschrift zeigt ein Hardtop-Fahrzeugdach, das zwischen einer Schließposition und zwei unterschiedlichen Öffnungspositionen - eine Targastellung und eine Cabrioletstellung - verstellbar ist und zwei hintereinander angeordnete, verstellbare Dachelemente aufweist, von denen das hintere Dachelement eine Heckscheibe trägt. Die beiden Dachelemente sind unabhängig voneinander drehbar an einem Verdeckkastendeckel gelagert, welcher einen Ablageraum zur Aufnahme der Dachelemente in Cabrioletstellung abdeckt.

Um das Hardtop-Fahrzeugdach in Targastellung zu versetzen, wird zunächst der Verdeckkastendeckel angehoben und anschließend das vordere Dachelement um seine Drehachse in eine Position unterhalb des Verdeckkastendeckels verschwenkt, der schließlich in seine den Ablageraum abdeckende Ausgangsstellung zurückkehrt. In Cabrioletstellung ist zusätzlich zum vorderen Dachelement auch das hintere Dachelement um seine Drehachse in eine Position unterhalb des Verdeckkastendeckels in den Ablageraum hinein verschwenkt.

Die gattungsbildende Druckschrift DE 197 37 259 A1 offenbart ein Hardtop-Fahrzeugdach mit einem vorderen und einem hinteren Dachelement, das zwischen einer Schließposition und einer Öffnungsposition zu verstellen ist, wobei in Öffnungs- bzw. Cabrioletstellung beide Dachelemente in einem Ablageraum hinter dem Fahrzeuginnenraum abgelegt sind. Bei der Überführung von Schließ- in Cabrioletstellung wird die Heckscheibe des Fahrzeuges aus den Seitenstützen des hinteren Dachelementes gelöst und im Ablageraum verstaut. Anschließend werden die Seitenstützen um eine räumliche Achse nach außen geklappt, so dass der zwischenliegende Bereich zwischen den beiden Seitenstützen verbreitert wird und zusätzlicher Raum für die Ablagebewegung des vorderen Dachteiles geschaffen wird. Das vordere Dachteil kann daraufhin auf einer Schienenführung zwischen den ausgelenkten Seitenstützen des hinteren Dachelementes ebenfalls in den Ablageraum eingefahren werden. Abschließend werden die Seitenstützen um eine zweite Schwenkachse, welche in etwa parallel zur Fahrzeuglängsachse verläuft, nach innen verschwenkt. Die Seitenstützen liegen in Öffnungsposition des Fahrzeugdaches etwa in Querrichtung.

Dieses Fahrzeugdach ist nur in eine Cabrioletstellung zu versetzen. Dagegen ist eine Targastellung - nur vorderes Dachteil geöffnet - und eine Landauletstellung - nur hinteres Dachteil geöffnet - nicht vorgesehen.

Die Seitenstützen der DE 197 37 259 A1 sind jeweils um zwei verschiedene, räumliche Achsen zu verschwenken, um die Cabrioletstellung zu erreichen. Dies macht eine vergleichsweise aufwendige Kinematik für die Seitenstützen erforderlich.

Die seitlich nach außen ausklappenden Seitenstützen überschreiten die seitliche Karosserielinie, wodurch Kollisionsgefahr mit unmittelbar an das Fahrzeug angrenzenden Gegenständen gegeben ist.

Aus der Druckschrift DE 197 06 417 C1 ist ein Fahrzeugdach bekannt, welches in eine Targa-, eine Landaulet- und in eine Cabrioletstellung zu versetzen und als Softtop mit einem stoffartigen Verdeckbezug ausgebildet ist, der in Ablagestellung zusammengefaltet abgelegt werden kann. Der Verdeck-Bezugsstoff wird von einem kinematischen Verdeckgestänge getragen, welches aus einer Mehrzahl untereinander beweglicher Bügel und Spriegel besteht und in Ablagestellung zusammengeklappt werden kann.

Softtops bieten einerseits den Vorteil, dass das Verdeck in Ablagestellung verhältnismäßig klein zusammengefaltet werden kann und auch bei der Überführungsbewegung zwischen Schließ- und Ablageposition der für die Bewegung des Daches erforderliche Raum vergleichsweise klein gehalten werden kann. Andererseits sind Hardtops wesentlich widerstandsfähiger, weisen eine höhere Dichtigkeit bei längerer Lebensdauer auf und sind im Vergleich zu Softtops verwindungssteifer.

Der Erfindung liegt das Problem zu Grunde, ein Hardtop-Fahrzeugdach zu schaffen, das sowohl in Targa- als auch in Landaulet- als auch in Cabrioletstellung zu versetzen ist und sowohl einen vergleichsweise nur geringen Bewegungsraum beim Öffnungsvorgang beansprucht als auch kompakt abzulegen ist.

Dieses Problem wird erfindungsgemäß mit den Merkmalen des Anspruches 1 gelöst. Vorteilhafte Weiterbildungen des Erfindungsgegenstandes sind den Unteransprüchen zu entnehmen.

Das hintere Dachelement umfasst Seitenstützen und eine Heckscheibe, die unabhängig von den Seitenstützen bewegbar ausgebildet ist. Dies ermöglicht eine Überführung des Fahrzeugdaches in eine Landaulet-Öffnungsstellung, indem die Heckscheibe in den Ablageraum verlagert wird und die Seitenstützen in ihrer Schließposition stehen bleiben. Das vordere Dachelement befindet sich in der Landauletstellung in seiner ursprünglichen Schließposition oberhalb des Fahrgastinnenraumes. Das vordere Dachelement wird in Landauletstellung von den ebenfalls in ihrer ursprünglichen Position verharrenden Seitenstützen des hinteren Dachelements gestützt, wodurch die Stabilität des Fahrzeugdaches in dieser Dachstellung wesentlich verbessert wird.

Das Fahrzeugdach kann somit drei unterschiedliche Öffnungsstellungen einnehmen: eine Targastellung, eine Landauletstellung sowie eine Cabrioletstellung. Sämtliche Öffnungsstellungen können unabhängig voneinander eingenommen werden. Insbesondere die Landauletstellung kann mit einem geringst möglichen Stell- und Überführungsaufwand erreicht werden, da lediglich die Heckscheibe aus ihrer Einfassung gelöst und in den Ablageraum verlagert werden muss, wohingegen das vordere Dachelement und sämtliche weiteren Bauteile des hinteren Dachelements, insbesondere die Seitenstützen, ihre Schließposition beibehalten können.

Falls ein Verdeckkastendeckel vorgesehen ist, so ist keine unmittelbare kinematische Kopplung zwischen der Stellbewegung des Verdeckkastendeckels und der Stellbewegung eines Bauteils des Fahrzeugdaches erforderlich. Es genügt, den Verdeckkastendeckel in einer koordinierten Bewegung zur Freigabe des Ablageraumes anzuheben, damit das betreffende Bauteil des Fahrzeugdaches bei einer Öffnungsbewegung in den Ablageraum versenkt werden kann. Im Falle einer kinematisch unabhängigen Bewegung von Verdeckkastendeckel und Fahrzeugdach kann der Verdeckkastendeckel weitgehend frei von konstruktiven Beschränkungen hergestellt werden.

Bei der Verstellbewegung zwischen Schließposition und Öffnungsposition führt die Heckscheibe vorteilhaft eine gemischt translatorisch/rotatorische Bewegung aus, die ihr durch eine Stellkinematik aufgeprägt wird. Die rotatorische Bewegungskomponente ermöglicht eine platzsparende Ablageposition in Öffnungsstellung innerhalb des Ablageraumes, die translatorische Bewegungskomponente ermöglicht die Verschiebung der Heckscheibe aus ihrer Schließposition am hinteren Bereich des Fahrgastinnenraums in den weiter entfernt liegenden Ablageraum.

Es kann gegebenenfalls aber auch zweckmäßig sein, eine ausschließlich translatorische oder ausschließlich rotatorisch Bewegung der Heckscheibe zwischen Schließposition und Öffnungsposition vorzusehen.

Vorteilhaft ist das vordere Dachelement über eine Bügelanordnung unmittelbar mit der Fahrzeugkarosserie verbunden, wobei die Bügelanordnung insbesondere zwei gelenkig geführte Bügel umfasst, welche zweckmäßig eine Verschwenkung des vorderen Dachelementes um etwa 180° bei der Überführung von Schließposition zur Öffnungsposition ermöglichen, so dass das vordere Dachelement im Ablageraum mit seiner Innenseite nach oben in Richtung der Öffnung des Ablageraumes weist. Diese Ausführung zeichnet sich durch ein besonders kompaktes Ablagemaß im Ablageraum aus. Vorteilhaft ist der erste Bügel der Bügelanordnung gelenkig an der Fahrzeugkarosserie und der zweite Bügel sowohl gelenkig am ersten Bügel als auch gelenkig am vorderen Dachelement angelenkt, so dass über die drei Gelenke der Bügelanordnung das vordere Dachelement drei Freiheitsgrade aufweist, die eine gemischte rotatorisch/translatorische Bewegung des Dachelementes ermöglichen. Eine unmittelbare kinematische Kopplung zwischen der Stellkinematik des vorderen Dachelementes und der Stellkinematik des hinteren Dachelementes ist nicht zwingend erforderlich, kann aber gegebenenfalls vorgesehen sein.

Wird nur das vordere Dachelement geöffnet, so nimmt das Fahrzeugdach eine Targastellung ein.

In Cabrioletstellung ist das vordere Dachelement im Ablageraum unterhalb der Heckscheibe abgelegt, wobei vorteilhaft die Innenseiten von Heckscheibe und vorderem Dachelement einander zugewandt angeordnet sind. Auch die Seitenstützen sind in Cabrioletstellung zweckmäßig in einen Ablageraum versenkt, insbesondere in einen Ablageraum zwischen den B-Säulen und den Radkästen des Fahrzeuges. Die Seitenstützen erfahren hierbei vorteilhaft eine gemischt translatorisch/rotatorische Verlagerung und weisen zweckmäßig in Cabrioletstellung mit ihrer Außenseite nach oben, so dass die Seitenstützung bei der Überführung in Cabrioletstellung nur eine geringe rotatorische Schwenkbewegung erfahren, wodurch die Stellkinematik vereinfacht wird.

Ein Ausführungsbeispiel der Erfindung wird nachstehend an Hand der Zeichnungen näher beschrieben. Es zeigen:
- Fig. 1: eine perspektivische Ansicht auf ein Hardtop-Fahrzeugdach in Schließposition,
- Fig. 2: das Fahrzeugdach in einer schematischen Darstellung in einer Zwischenstellung bei der Überführung in Targastellung,
- Fig. 3: das Fahrzeugdach in Targastellung,
- Fig. 4: das Fahrzeugdach in Landauletstellung,
- Fig. 5: das Fahrzeugdach in Cabrioletstellung.

In den folgenden Figuren sind gleiche Bauteile mit gleichen Bezugszeichen versehen.

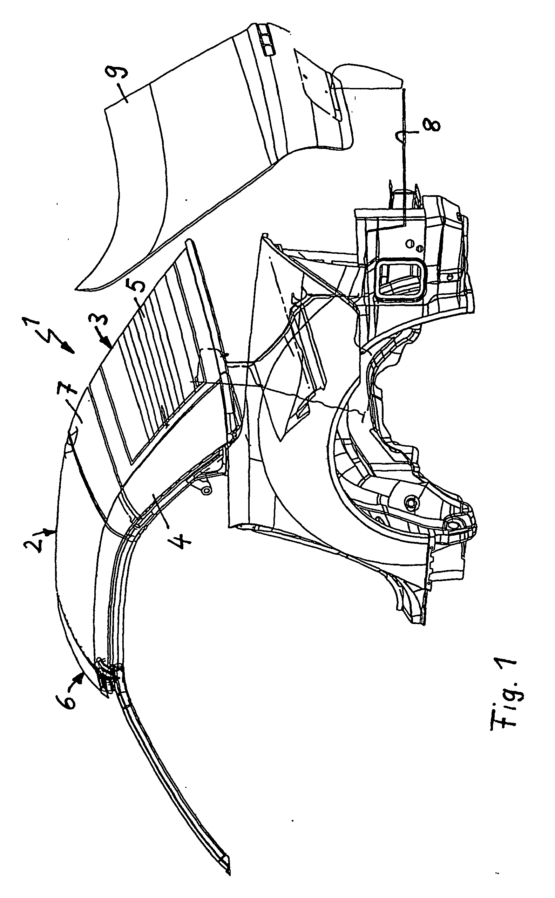

Das in Fig. 1 dargestellte Fahrzeugdach 1 ist als Hardtop ausgebildet und umfasst ein vorderes Dachelement 2 sowie ein hinteres Dachelement 3, das vordere und das hintere Dachelement 2 bzw. 3 sind jeweils in sich starr ausgebildet. In Fig. 1 ist das Fahrzeugdach in Schließstellung gezeigt, in der das vordere Dachelement 2 an einen Windschutzscheibenrahmen 6 des Fahrzeugs angrenzt. Das hintere Dachelement 3 besteht aus Seitenstützen 4, einer Heckscheibe 5 und einem die Heckscheibe zumindest teilweise einfassenden Rahmen 7. Die Heckscheibe 5 ist unabhängig von den Seitenstützen 4 des hinteren Dachelements 3 bewegbar, wobei die Heckscheibe 5 zweckmäßig einschließlich ihrem einfassenden Rahmen 7 aus dem Verbund mit den Seitenstützen 4 gelöst werden kann. Zweckmäßig besteht keine unmittelbare Kopplung zwischen den Stellkinematiken, über die die Seitenstützen 4 und die Heckscheibe 5 zwischen der in Fig. 1 gezeigten Schließposition und einer Öffnungsposition zu verstellen sind. Auch zwischen der das vordere Dachelement 2 beaufschlagenden Stellkinematik und einer der Stellkinematiken für das hintere Dachelement 3 besteht vorteilhaft keine unmittelbare kinematische Kopplung. Das vordere Dachelement 2, die Seitenstützen 4 und die Heckscheibe 5 sind prinzipiell unabhängig voneinander zu bewegen.

Hinter dem Fahrgastraum, der in Schließstellung von dem Fahrzeugdach 1 überspannt wird, befindet sich ein Ablageraum 8, der von einem Verdeckkastendeckel 9 abzudecken ist. Der Verdeckkastendeckel 9 kann über eine hintere, dem Fahrgastinnenraum abgewandte Schwenkachse geöffnet werden, damit der Ablageraum für die Ablage der Bauteile des Fahrzeugdaches in Öffnungsstellung freigegeben wird.

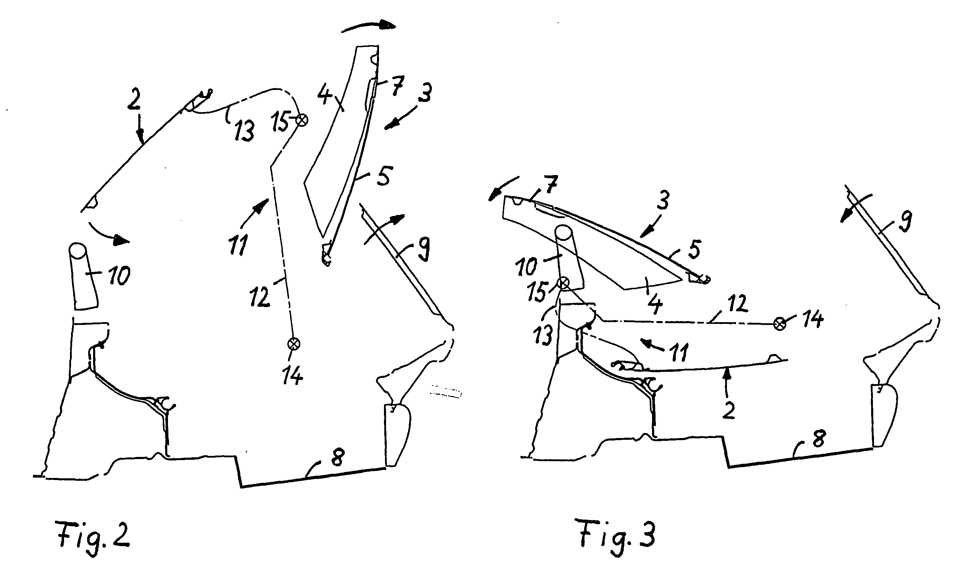

In der in Fig. 2 gezeigten Zwischenstellung zwischen der Schließstellung und der Targa-Öffnungsstellung wird zunächst das hintere Dachelement 3 um eine Querachse quer zur Fahrzeuglängsachse aufgeschwenkt, um einen ausreichenden Bewegungsraum für die Öffnungsbewegung des vorderen Dachelementes 2 zu schaffen. Gleichzeitig wird der Verdeckkastendeckel 9 geöffnet, um den Ablageraum 8 zugänglich zu machen. Bei der Öffnungsbewegung des hinteren Dachelementes 3 wird dieses insgesamt mit den Seitenstützen 4, der Heckscheibe 5 und dem einfassenden Rahmen 7 verschwenkt. Nachdem das hintere Dachelement 3 in die in Fig. 2 gezeigte aufrechte Position verstellt worden ist, wird das vordere Dachelement 2 über eine Bügelanordnung 11 aus der Schließposition in die Öffnungsposition verstellt. Über die Bügelanordnung 11 ist das vordere Dachelement 2 unmittelbar an der Fahrzeugkarosserie des Fahrzeugs befestigt. Die Bügelanordnung 11 besteht aus zwei Bügeln 12 und 13, von denen der erste Bügel 12 über ein Gelenk 14 drehbar an der Fahrzeugkarosserie angelenkt ist und der zweite Bügel 13 über ein weiteres Gelenk 15 drehbar am ersten Bügel 12 angelenkt ist. Über eine gesteuerte Bewegung der Bügelanordnung 11 ist das vordere Dachelement 2 in der Lage, bei der Überführung zwischen Schließ- und Öffnungsstellung bezüglich eines fahrzeugfesten Koordinatensystems sowohl eine translatorische als auch eine rotatorische Stellbewegung auszuführen. Die zumindest zwei Freiheitsgrade der Bügelanordnung 11 ermöglichen es dem vorderen Dachelement 2, eine Bewegungsbahn auszuführen, welche nicht mit weiteren Fahrzeug-Bauteilen kollidiert, insbesondere über die Kopfstützen 10 hinweggeführt ist.

In der in Fig. 3 gezeigten Targastellung befindet sich das hintere Dachelement 3 wieder in seiner Schließstellung, in der es aus der in Fig. 2 gezeigten aufrechten Position wieder zurückgekehrt ist. Das vordere Dachelement 2 ist gegenüber der Schließposition um etwa 180° verschwenkt und außerdem translatorisch verschoben worden und liegt nun in seiner Ablagestellung im Ablageraum 8; die Innenseite des vorderen Dachelementes 2 zeigt somit in der Ablagestellung nach oben in Richtung des Ablageraums. Nach der Überführung in den Ablageraum 8 wird der Verdeckkastendeckel 9 wieder geschlossen.

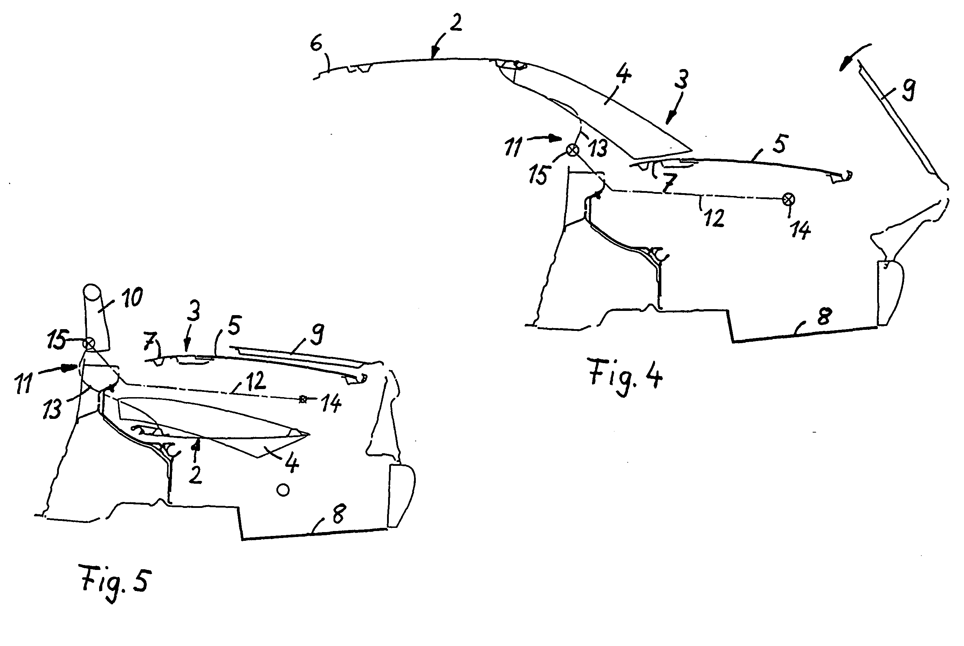

In Fig. 4 ist das Fahrzeugdach in Landauletstellung gezeigt, in der das vordere Dachelement 2 sich in seiner Schließposition am Windschutzscheibenrahmen 6 befindet und auch die Seitenstützen 4 des hinteren Dachelementes 3 ihre Schließstellung einnehmen, in der das vordere Dachelement 2 abgestützt wird; zugleich ist die Heckscheibe 5 einschließlich ihres Rahmens 7 in ihre Öffnungsstellung versetzt worden und befindet sich nunmehr im oberen Abschnitt des Ablageraumes 8. Der Verdeckkastendeckel 9 ist in geöffneter Position gezeigt, er kann in Pfeilrichtung geschlossen werden, um den Ablageraum 8 und die Heckscheibe 5 abzudecken. Die Heckscheibe 5 ist im Ablageraum 8 mit ihrer Außenseite in Richtung der Öffnung des Ablageraumes abgelegt.

In Fig. 5 ist das Fahrzeugdach in seiner Cabriolet-Öffnungsposition dargestellt, in der sowohl das vordere Dachelement 2 als auch das hintere Dachelement 3 einschließlich der Seitenstützen 4 und der Heckscheibe 5 im Ablageraum 8 verstaut sind. Die Innenseiten der Heckscheibe 5 und des vorderen Dachelements 2 sind in Ablagestellung einander zugewandt, wobei die Heckscheibe 5 oberhalb des vorderen Dachelementes 2 angeordnet ist und somit näher im Bereich der Öffnung des Ablageraumes liegt.

## Patentansprüche

1. Zwischen einer Schließposition und einer Öffnungsposition verstellbares Hardtop-Fahrzeugdach, mit einem vorderen Dachelement (2) und einem hinteren Dachelement (3), das Seitenstützen (4) und eine Heckscheibe (5) umfasst, wobei zur Überführung in Cabrioletstellung beide Dachelemente (2, 3) in einen Ablageraum (8) überführbar sind und die Heckscheibe (5) als ein unabhängig von den Seitenstützen (4) des hinteren Dachelements (3) bewegbares Bauteil ausgebildet ist,
**dadurch gekennzeichnet,**
- **dass** das vordere Dachelement (2) zur Überführung in eine Targastellung unabhängig vom hinteren Dachelement (5) verlagerbar ausgebildet ist,
- **dass** zur Überführung des Fahrzeugdaches (1) in eine Landaulet-Öffnungsstellung die Heckscheibe (5) in den Ablageraum (8) verlagerbar ist und die Seitenstützen (4) und das vordere Dachelement (2) ihre Schließposition beibehalten,
- **dass** zur Überführung des Fahrzeugdaches (1) aus der Schließposition in die Targastellung das hintere Dachelement (3) um eine Querachse quer zur Fahrzeuglängsachse aufschwenkbar ist, derart, dass ein ausreichender Bewegungsraum für die Öffnungsbewegung des vorderen Dachelementes (2) geschaffen wird,
- **dass** das vordere Dachelement (2) bei der Überführung zwischen Schließposition und Öffnungsposition eine Verschwenkung um etwa 180° ausführt und in Cabrioletstellung im Ablageraum unterhalb der Heckscheibe (5) abgelegt ist.

2. Hardtop-Fahrzeugdach nach Anspruch 1,
**dadurch gekennzeichnet,**
**dass** an der Heckscheibe (5) eine Stellkinematik angreift, die der Heckscheibe (5) bei der Überführung zwischen Schließposition und Öffnungsposition eine translatorische und/oder rotatorische Bewegung aufzwingt.

3. Hardtop-Fahrzeugdach nach Anspruch 1 oder 2,
**dadurch gekennzeichnet,**
**dass** das vordere Dachelement (2) über eine Bügelanordnung (11) unmittelbar an der Fahrzeugkarosserie angebunden ist.

4. Hardtop-Fahrzeugdach nach Anspruch 3,
**dadurch gekennzeichnet,**
**dass** die Bügelanordnung (11) zwei gelenkig geführte Bügel (12, 13) umfasst.

5. Hardtop-Fahrzeugdach nach einem der Ansprüche 1 bis 4,
**dadurch gekennzeichnet,**
**dass** die Heckscheibe(5) in Landauletstellung und in Cabrioletstellung in dem Ablageraum (8) mit der Außenseite zur Öffnung de Ablageraums (8) hin abgelegt ist.

6. Hardtop-Fahrzeugdach nach einem der Ansprüche 1 bis 5,
**dadurch gekennzeichnet,**
**dass** die Seitenstützen (4) zwischen Schließstellung und Öffnungsstellung eine translatorisch/rotatorische Verlagerung erfahren und in Cabrioletstellung mit ihrer Außenseite nach oben abgelegt sind.

## Claims

1. Hardtop motor-vehicle roof which can be retracted between a closed position and an open position, with a front roof element (2) and a rear roof element (3) which comprises side supports (4) and a rear window (5), wherein, for transfer into the cabriolet position, the two roof elements (2, 3) can be transferred into a storage space (8) and the rear window (5) is designed as a component which is moveable independently of the side supports (4) of the rear roof element (3),
**characterized**
- **in that** the front roof element (2) is designed such that it can be shifted independently of the rear roof element (3) for transfer into a targa position,
- **in that**, in order to transfer the motor vehicle roof (1) into a landaulet opening position, the rear window (5) can be shifted into the storage space (8) and the side supports (4) and the front roof element (2) maintain their closed position,
- **in that**, in order to transfer the motor vehicle roof (1) from the closed position into the targa position, the rear roof element (3) can be pivoted upwards about a transverse axis transversely with respect to the longitudinal direction of the motor vehicle in such a manner that a sufficient movement space for the opening movement of the front roof element (2) is created,
- **in that** the front roof element (2) executes a pivoting through approximately 180° during the transfer between the closed position and open position and, in the cabriolet position, is deposited in the storage space below the rear window (5).

2. Hardtop motor-vehicle roof according to Claim 1, **characterized in that** an adjusting kinematics acts on the rear window (5) and, during the transfer between the closed position and open position, forces the rear window (5) into a translatory and/or rotational movement.

3. Hardtop motor-vehicle roof according to Claim 1 or 2, **characterized in that** the front roof element (2) is connected directly to the motor-vehicle body via a bow arrangement (11).

4. Hardtop motor-vehicle roof according to Claim 3, **characterized in that** the bow arrangement (11) comprises two bows (12, 13) guided in an articulated manner.

5. Hardtop motor-vehicle roof according to one of Claims 1 to 4, **characterized in that**, in the landaulet position and in the cabriolet position, the rear window (5) is deposited in the storage space (8) with the outside towards the opening of the storage space (8).

6. Hardtop motor-vehicle roof according to one of Claims 1 to 5, **characterized in that** the side supports (4) undergo a translatory/rotational shifting between the closed position and open position and, in the cabriolet position, are deposited with their outside upwards.

## Revendications

1. Toit rigide de véhicule pouvant être déplacé entre une position fermée et une position ouverte, avec un élément de toit avant (2) et un élément de toit arrière (3) qui comprend des montants latéraux (4) et une lunette arrière (5), sachant que pour le transfert en position cabriolet, les deux éléments de toit (2, 3) peuvent être déplacés dans un compartiment de rangement (8), et que la lunette arrière (5) est conçue comme pièce mobile indépendamment des montants latéraux (4) de l'élément de toit arrière (3),
**caractérisé**
- **en ce que** l'élément de toit avant (2) est conçu, pour le transfert dans une position Targa, mobile indépendamment de l'élément de toit arrière (3),
- **en ce que**, pour le transfert du toit de véhicule (1) dans une position ouverte Landaulet, la lunette arrière (5) peut être déplacée dans le compartiment de rangement (8), tandis que les montants latéraux (4) et l'élément de toit avant (2) conservent leur position fermée,
- **en ce que**, pour le transfert du toit de véhicule (1) de la position fermée dans la position Targa, l'élément de toit arrière (3) peut pivoter vers le haut autour d'un axe transversal, transversalement à l'axe longitudinal du véhicule, de telle sorte qu'un espace de déplacement suffisant est fourni pour le mouvement d'ouverture de l'élément de toit avant (2),
- **en ce que** l'élément de toit avant (2) effectue un pivotement d'environ 180° lors du transfert entre la position fermée et la position ouverte et est, dans la position cabriolet, déposé en dessous de la lunette arrière (5) dans le compartiment de rangement.

2. Toit rigide de véhicule selon la revendication 1, **caractérisé en ce qu'**un mécanisme cinématique d'actionnement agit sur la lunette arrière (5) et lui impose un mouvement de translation et/ou de rotation lors du transfert entre la position fermée et la position ouverte.

3. Toit rigide de véhicule selon la revendication 1 ou 2, **caractérisé en ce que** l'élément de toit avant (2) est directement relié à la carrosserie du véhicule par l'intermédiaire d'un ensemble de bielles (11).

4. Toit rigide de véhicule selon la revendication 3, **caractérisé en ce que** l'ensemble de bielles (11) comprend deux bielles (12, 13) reliées en articulation.

5. Toit rigide de véhicule selon l'une des revendications 1 à 4, **caractérisé en ce que** la lunette arrière (5) est, en position Landaulet et en position cabriolet, déposée dans le compartiment de rangement (8) avec le côté extérieur tourné vers l'ouverture du compartiment de rangement (8).

6. Toit rigide de véhicule selon l'une des revendications 1 à 5, **caractérisé en ce que** les montants latéraux (4) sont déplacés en translation/rotation entre la position fermée et la position ouverte et sont, en position cabriolet, déposés avec leur côté extérieur vers le haut.
